# EUROPEAN PATENT APPLICATION

(11) **EP 4 730 028 A1**
(43) Date of publication of application: **22.04.2026**
(21) Application number: 25209114.5
(22) Date of filing: 16.10.2025
(51) Int. Cl.: G03B 3/10, G02B 7/08, G02B 7/28, G03B 21/14, G03B 21/53, H04N 9/31, G02B 7/09

(54) **FOCUSING CONTROL METHOD, APPARATUS, PROJECTOR, AND STORAGE MEDIUM**

(30) Priority: 18.10.2024 CN 202411464735
(71) Applicant: Shenzhen Oceanwing Smart Innovations Technology Co., Ltd, Shenzhen City, Guangdong Province 518055 (CN)
(72) Inventor: LIU, Huachao, Shenzhen City, Guangdong Province, 518055 (CN); NIE, Qingchun, Shenzhen City, Guangdong Province, 518055 (CN)
(74) Representative: Wörz, Volker Alfred

(57) **Abstract**

A focusing control method is performed by a focus-to-be-adjusted device. The focusing control method includes: during a current focusing process of the focus-to-be-adjusted device, obtaining (S110) current magnetic encoder data of the focus-to-be-adjusted device and a first focusing motor movement direction during a previous focusing process; determining (S120) target magnetic encoder data corresponding to the current focusing process, where the target magnetic encoder data represents magnetic encoder data, during the current focusing process, at which a projected image is in focus; and controlling (S130) the focus-to-be-adjusted device to perform focusing based on the current magnetic encoder data, the target magnetic encoder data, and the first focusing motor movement direction.

## Description

### TECHNICAL FIELD

Embodiments of the present disclosure relate to the technical field of public user interfaces, and more specifically, to a focusing control method, an apparatus, a projector, and a storage medium.

### BACKGROUND

For an optical device in which focusing is required, when hassle-free autofocus is applied in the art, issues such as focusing motor backlash and step loss may occur. In severe cases, a focusing motor may not reach a desired focal point, resulting in blurred images.

In the art, in order to solve the backlash, detection performed by an optical coupler of the focusing motor needs to be stable. When detection deviation occurs, the focusing motor may not reach a desired position. In addition, during a focusing process, optical clarity of a projector may change significantly. An image may be extremely blurry at the beginning, and may be gradually becoming clear, and therefore, a poor user experience may be provided. Furthermore, in order to eliminate the backlash, the focusing motor may traverse a relatively long distance, and a user may noticeably percept a focusing time length, the focusing time length may be relatively long. Moreover, when the focusing motor has the step loss, the step loss may not be detected or compensated in the art. In this case, blurry focusing may be caused, affecting the user experience.

### SUMMARY

In order to overcome the poor user experience caused by the backlash and the step loss of the focusing motor, the present disclosure provides a focusing control method, an apparatus, a projector, and a storage medium.

In a first aspect, the present disclosure provides a focusing control method, performed by a focus-to-be-adjusted device. The focus-to-be-adjusted device includes a magnetic encoder, a lens barrel, and a focusing motor; the focusing motor is configured to drive the lens barrel to move, and the magnetic encoder is mounted on the lens barrel; magnetic encoder data of the magnetic encoder is configured to represent a movement distance of the lens barrel; the focusing control method includes:
During a current focusing process of the focus-to-be-adjusted device, obtaining current magnetic encoder data of the focus-to-be-adjusted device and a first focusing motor movement direction during a previous focusing process;
Determining target magnetic encoder data corresponding to the current focusing process; wherein the target magnetic encoder data represents magnetic encoder data, during the current focusing process, at which a projected image is in focus; and
Controlling the focus-to-be-adjusted device to perform focusing based on the current magnetic encoder data, the target magnetic encoder data, and the first focusing motor movement direction.

In some embodiments, the controlling the focus-to-be-adjusted device to perform focusing based on the current magnetic encoder data, the target magnetic encoder data, and the first focusing motor movement direction, includes:
Determining, based on the current magnetic encoder data and the target magnetic encoder data, a second focusing motor movement direction during the current focusing process;
Determining a target focusing strategy for the current focusing process based on the first focusing motor movement direction and the second focusing motor movement direction; and
Controlling the focus-to-be-adjusted device to perform focusing based on the current magnetic encoder data, the target magnetic encoder data, and the target focusing strategy.

In some embodiments, the determining a target focusing strategy for the current focusing process based on the first focusing motor movement direction and the second focusing motor movement direction, includes:
Determining a first focusing strategy to be used as the target focusing strategy, in response to the first focusing motor movement direction being the same as the second focusing motor movement direction.

When the target focusing strategy is the first focusing strategy, the controlling the focus-to-be-adjusted device to perform focusing based on the current magnetic encoder data, the target magnetic encoder data, and the target focusing strategy, includes:
Obtaining a magnetic encoder error of the focus-to-be-adjusted device;
Controlling the focusing motor of the focus-to-be-adjusted device to move step by step, and after each movement step, determining whether a difference between real-time magnetic encoder data corresponding to each movement step and the target magnetic encoder data is less than the magnetic encoder error;

In response to the difference between the real-time magnetic encoder data and the target magnetic encoder data being less than the magnetic encoder error, determining that the current focusing process of the focus-to-be-adjusted device is completed.

In some embodiments, before the controlling the focusing motor of the focus-to-be-adjusted device to move step by step, the method further includes:
Determining first magnetic encoder data based on the current magnetic encoder data, the target magnetic encoder data, and the magnetic encoder error; wherein the first magnetic encoder data is greater than the magnetic encoder error and less than the difference between the target magnetic encoder data and the current magnetic encoder data; and
Controlling the focusing motor of the focus-to-be-adjusted device to move until the corresponding real-time magnetic encoder data reaches the first magnetic encoder data.

In some embodiments, the determining a target focusing strategy for the current focusing process based on the first focusing motor movement direction and the second focusing motor movement direction, includes:
Determining a second focusing strategy to be used as the target focusing strategy in response to the first focusing motor movement direction being different from the second focusing motor movement direction.

When the target focusing strategy is the second focusing strategy, the controlling the focus-to-be-adjusted device to perform focusing based on the current magnetic encoder data, the target magnetic encoder data, and the target focusing strategy, includes:
Controlling the focus-to-be-adjusted device to perform backlash elimination processing; and
After the backlash elimination processing of the focus-to-be-adjusted device is completed, controlling the focus-to-be-adjusted device to perform focusing based on the current magnetic encoder data, the target magnetic encoder data, and the first focusing strategy.

In some embodiments, the controlling the focus-to-be-adjusted device to perform backlash elimination processing, includes:
Controlling the focusing motor of the focus-to-be-adjusted device to move by increments of a set value until the real-time magnetic encoder data after movement being different from the current magnetic encoder data; and determining that the backlash elimination processing is completed, wherein the set value is less than or equal to half of a depth of focus.

In some embodiments, the determining target magnetic encoder data corresponding to the current focusing process, includes:
Obtaining a current projection distance of the focus-to-be-adjusted device;
Taking the current projection distance as a current image distance, obtaining an object distance corresponding to the current image distance based on lens principles; and
Determining the target magnetic encoder data based on a target motor position corresponding to the object distance.

In a second aspect, the present disclosure provides a focusing control method apparatus, including:
An obtaining module, configured to obtain, during a current focusing process of a focus-to-be-adjusted device, current magnetic encoder data of the focus-to-be-adjusted device and a first focusing motor movement direction during a previous focusing process;
A determination module, configured to determine target magnetic encoder data corresponding to the current focusing process; wherein the target magnetic encoder data represents magnetic encoder data, during the current focusing process, at which a projected image is in focus; and
A focusing module, configured to control ling the focus-to-be-adjusted device to perform focusing based on the current magnetic encoder data, the target magnetic encoder data, and the first focusing motor movement direction.

In a third aspect, the present disclosure provides a projection device, including:
A processor; and
A memory, configured to storing instructions executable by the processor.

The processor is configured to execute the focusing control method in the above aspect.

In a fourth aspect, the present disclosure provides a storage medium, storing one or more programs. The one or more programs are executable by one or more processors to implement the focusing control method in the above aspect.

According to the present disclosure, when a current focusing process of a focus-to-be-adjusted device is initiated, current magnetic encoder data and a movement direction of a focusing motor during a previous focusing process (referred to as a first focusing motor movement direction) of the focus-to-be-adjusted device are first acquired. Magnetic encoder data, when a projected image meets requirements (such as achieving sharp focus) during the current focusing process, is determined (and is referred to as target magnetic encoder data). Subsequently, focusing of the device is controlled based on the above-mentioned magnetic encoder data and the movement direction of the focusing motor. Since a magnetic encoder is mounted on a lens barrel of an optical engine, when the focusing motor drives the lens barrel to move forward or backward, the magnetic encoder may read data changes. The data changes reflect a position of the lens barrel. That is, the magnetic encoder data may accurately reflect the position of the lens barrel. Accordingly, the magnetic encoder data may be used to determine whether focusing is complete. In this way, the focusing does not rely on an optical coupler of the focusing motor, and influences caused by focusing motor backlash may be eliminated. Furthermore, influences caused by step loss of the focusing motor may be eliminated. Hassle-free autofocusing may be achieved, rapid and precise focusing may be achieved, and the user experience may be improved.

It should be understood that the above general description and the subsequent detailed description are merely illustrative and explanatory, and do not limit the scope of the present disclosure.

### BRIEF DESCRIPTION OF THE DRAWINGS

The accompanying drawings are incorporated with the specification and form part of the specification, the drawings show embodiments of the present disclosure. The drawings and the specification are provided to explain principles of the present disclosure.
FIG. 1 is a flow chart of a focusing control method according to an embodiment of the present disclosure.
FIG. 2 is a block diagram of a focusing control apparatus according to an embodiment of the present disclosure.
FIG. 3 is a block diagram of a projection device according to an embodiment of the present disclosure.

### DETAILED DESCRIPTIONS

Embodiments of the present disclosure will be described in the following by referring to the accompanying drawings. Any ordinary skilled person in the art shall understand other advantages and effects of the present disclosure based on the description herein. The present disclosure may alternatively be implemented or applied through other embodiments. Details described herein may be modified or changed based on various perspectives and applications without departing from the spirit of the present disclosure. It should be understood that the embodiments are provided for illustrative purposes only and are not intended to limit the scope of the present disclosure.

It should be noted that the drawings provided in the following embodiments are merely illustrative of basic concepts of the present disclosure. Therefore, the drawings show only components relevant to the present disclosure and do not represent the actual number, shape, or size of components in an implementation. In practice, forms, numbers, and proportions of the components may be arbitrarily changed, and a layout and configuration of the components may be more complex.

Implementations of the present disclosure will be described in the following by referring to the accompanying drawings and preferred embodiments. Any ordinary skilled person in the art shall understand other advantages and effects of the present disclosure based on the description herein. The present disclosure may alternatively be implemented or applied through other implementations. The details described herein may be modified or changed based on various perspectives and applications without departing from the spirit of the present disclosure. It should be understood that the embodiments are provided for illustrative purposes only and are not intended to limit the scope of the present disclosure.

In order to solve the aforementioned technical problem of poor focusing experience caused by focusing motor backlash and step loss, the present disclosure provides a focusing control method, an apparatus, a projector, and a storage medium. According to the present disclosure, when a current focusing process of a focus-to-be-adjusted device is initiated, current magnetic encoder data and a movement direction of a focusing motor during a previous focusing process (referred to as a first focusing motor movement direction) of the focus-to-be-adjusted device are first acquired. Magnetic encoder data, when a projected image meets requirements (such as achieving sharp focus) during the current focusing process, is determined (and is referred to as target magnetic encoder data). Subsequently, focusing of the device is controlled based on the above-mentioned magnetic encoder data and the movement direction of the focusing motor. Since a magnetic encoder is mounted on a lens barrel of an optical engine, when the focusing motor drives the lens barrel to move forward or backward, the magnetic encoder may read data changes. The data changes reflect a position of the lens barrel. That is, the magnetic encoder data may accurately reflect the position of the lens barrel. Accordingly, the magnetic encoder data may be used to determine whether focusing is complete. In this way, the focusing does not rely on an optical coupler of the focusing motor, and influences caused by focusing motor backlash may be eliminated. Furthermore, influences caused by step loss of the focusing motor may be eliminated. Hassle-free autofocusing may be achieved, rapid and precise focusing may be achieved, and the user experience may be improved.

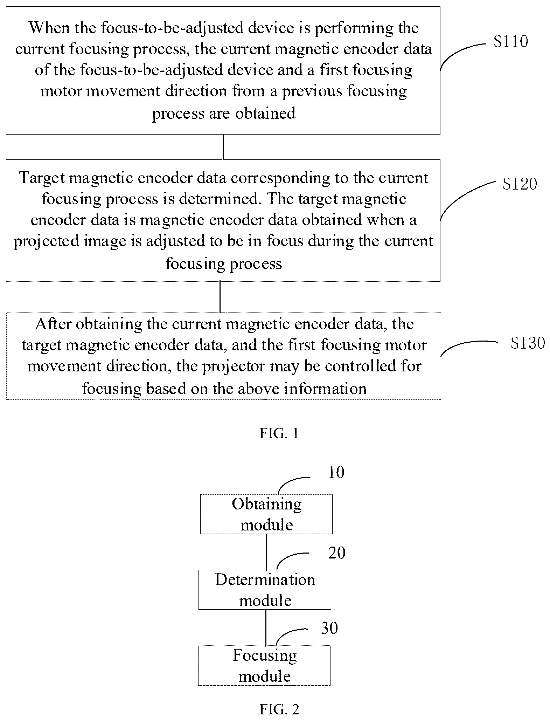

In an embodiment, a focusing control method is provided and is performed by a device requiring focusing (i.e., a focus-to-be-adjusted device), such as a projection device. The focus-to-be-adjusted device may include a magnetic encoder, a lens barrel, and a focusing motor. The focusing motor may be configured to drive the lens barrel to move. Movement of the lens barrel may drive lenses arranged inside the lens barrel to move. The magnetic encoder may be mounted on the lens barrel, and magnetic encoder data of the magnetic encoder may be configured to represent a movement distance of the lens barrel. As shown in FIG. 1, the method may include following blocks.

In a block S110, when the focus-to-be-adjusted device is performing the current focusing process, the current magnetic encoder data of the focus-to-be-adjusted device and a first focusing motor movement direction during a previous focusing process are obtained.

In a block S120, target magnetic encoder data corresponding to the current focusing process is determined. The target magnetic encoder data is magnetic encoder data obtained when a projected image is adjusted to be in focus during the current focusing process.

In a block S130, the focus-to-be-adjusted device is controlled to perform focusing based on the current magnetic encoder data, the target magnetic encoder data, and the first focusing motor movement direction.

In the block S110, the focus-to-be-adjusted device may be the projection device or any other device which has a focus that needs to be adjusted. The device may not be limited herein. The projection device refers to a device having projection capabilities, such as a projector. The present embodiment will be described by taking the projector as an example. The projector, also known as an optical engine, is a device capable of projecting images or videos onto a screen or a surface.

In the present block, when the focus-to-be-adjusted device performs the current focusing process, the magnetic encoder data of the focus-to-be-adjusted device at a current state may be immediately obtained and recorded as the current magnetic encoder data. The current magnetic encoder data may represent a current position of the focusing motor. In addition, the movement direction of the focusing motor during the previous focusing process may be synchronously obtained and recorded as the first focusing motor movement direction. The first focusing motor movement direction refers to a direction in which the focusing motor moves during the previous focusing process at which the image is adjusted to be in focus.

The current focusing process may be triggered in various ways. For example, when the projector receives control information in which a user initiates focusing, the current focusing process may be triggered to perform a current focusing operation. In another example, when a timing condition or other conditions for triggering the current focusing process are met, the current focusing process of the projector may be triggered to perform the current focusing operation. Of course, besides the above methods, the current focusing process of the projector may also be triggered through other means, which are not limited herein.

In the block S120, it should be noted that, for the projector, when the focusing motor continuously moves in a same direction, the focusing motor may accurately drive the lens barrel to move. However, when the focusing motor moves in different directions during two consecutive focusing processes, structural clearance errors may cause a part of the movement of the focusing motor to be unable to drive the lens barrel to move. In this way, the backlash is generated.

In the projector, the number of steps that the focusing motor, corresponding to a focal depth (a distance range in a front-rear direction for the lens to generate an in-focus image during image or video capturing), needs to move may be determined based on a change in the focal length per step as the focusing motor moves. For the projector, each movement step of the focusing motor corresponds to an equal change in an object distance, denoted as h. According to lens principles, 1/u + 1/v = 1/f. The focal length f of the optical engine is fixed, and therefore, when an image distance v is known, the object distance u, i.e., a distance between a digital micromirror device (DMD) and the lens, may be calculated.

In the projector, the magnetic encoder may be an encoder manufactured based on magnetoelectric principles. The magnetic encoder may They measure a position of an object, a velocity of an object, or an angle of an object based on changes in a magnetic field. Since the magnetic encoder is mounted on the lens barrel of the projector, the magnetic encoder may read data changes as the focusing motor drives the lens barrel to move forward and backward. Based on correlation between the movement step of the focusing motor and the magnetic encoder data, the position of the focusing motor at given magnetic encoder data may be determined. In this way, a mapping relationship between the position of the focusing motor and the magnetic encoder data may be obtained.

The mapping relationship between the position of the focusing motor and the magnetic encoder data may be determined through pre-calibration. Since the magnetic encoder is mounted at the lens barrel, a reading of the magnetic encoder (i.e., the magnetic encoder data) may reflect a distance at which the lens barrel moves forward and backward. Controlling movement of the lens barrel refers to controlling movement of the focusing motor, as the focusing motor drives the lens barrel to move. Therefore, a relationship exists among the focusing motor, the lens barrel, and the magnetic encoder. Due to various devices having variations in structural tolerances and assembly tolerances, precise calibration is required to establish the mapping relationship between the position of the focusing motor and the magnetic encoder data.

In some embodiments, a projection distance may be fixed, and the focusing motor may be controlled to traverse a full range. In this process, the position of the focusing motor at each step is recorded, and at the same time, the corresponding magnetic encoder data may be obtained. In this way, the mapping relationship between the position of the focusing motor and the magnetic encoder data may be established. Specific operations are as follows.
1. The focusing motor may be controlled to move to a first end of the entire structure. Structural engagement or a limit sensor (such as a photoelectric sensor, a mechanical limit switch) may be used to determine that the focusing motor arrives at the desired position.
2. An initial step count of the focusing motor at this moment is recorded as A, and the magnetic encoder data at this moment is read and recorded as Z0.
3. The focusing motor may be controlled to moves toward a second end of the entire structure. The step count and the magnetic encoder data for each movement step of the focusing motor are recorded. Recording is stopped when the focusing motor reaches the second end (determined by the structural engagement or the limit sensor).

According to the above operations, a plurality of sets of movement step counts and the magnetic encoder data are obtained as: (A, Z0), (A+1, Z1), (A+2, Z2). ..... (A+n, Zn).

To be noted that, the first end and the second end are two opposite ends. For example, the first end may be a leftmost end, and the second end may be a rightmost end. Alternatively, the first end may be the rightmost end, and the second end may be the leftmost end.

In the present embodiment, after obtaining the plurality of sets of movement step counts and the magnetic encoder data of the focusing motor, the mapping relationship between the position of the focusing motor and the magnetic encoder data may be obtained based on the obtained data. Furthermore, the mapping relationship may be stored in a non-volatile memory of the projector. Through the above process, calibration of the mapping relationship between the position of the focusing motor and the magnetic encoder data may be completed.

In another embodiment, since each movement step of the focusing motor drives the lens barrel to move for an equal movement distance, a corresponding change in the magnetic encoder data may be linear. Therefore, the mapping relationship between the position of the focusing motor and the magnetic encoder data may be calibrated by a linear equation therebetween.

In the present embodiment, the focusing motor may be controlled to move to the first end of the entire structure. Subsequently, the focusing motor may be controlled to move from the current position (i.e., the first end) to the second end of the entire structure, and the total number of movement steps may be recorded as n. In the present embodiment, arrival of the focusing motor at the desired position may be determined using the structural engagement or the limit sensor (such as the photoelectric sensor, the mechanical limit switch, and so on).

In the present embodiment, the mapping relationship between the magnetic encoder data and the focusing motor has a plurality of linear segments throughout the entire travel range of the focusing motor. Therefore, the total number of movement steps n of the focusing motor may be divided equally into e parts, and the number of movement steps y in each of the e parts may be obtained. Specifically, based on practical requirements, 0 < y ≤ n/10 may be set, and that is, the e is greater than or equal to 10. Alternatively, other ranges may be set, which will not be limited herein.

In the present embodiment, when the focusing motor is at the first end, the initial step count may be set as A, and the magnetic encoder data corresponding to the first end may be Z0. Subsequently, the focusing motor may be controlled to move n/e steps at a time, and the movement step count and the corresponding magnetic encoder data each time may be read. Reading may be stopped when the focusing motor reaches the second end. In this way, the plurality of sets of the movement step counts and the magnetic encoder data may be obtained, such that correlation between a plurality of positions of the focusing motor and corresponding magnetic encoder data may be determined.

According to a formula y = kx + b (where the y represents the position of the focusing motor and the x represents the magnetic encoder data), the magnetic encoder data of two adjacent points may be substituted into the x, and corresponding positions of the focusing motor may be substituted into the y. In this way, a linear relationship for a segment between the two adjacent points may be obtained (i.e., the k and the b in the formula may be obtained). In this way, the mapping relationship between e positions of the focusing motor and the corresponding magnetic encoder data may be obtained, calibration of the mapping between the position of the focusing motor and the corresponding magnetic encoder data may be completed.

It should be noted that, in addition to the above method for calibrating the mapping between the position of the focusing motor and the magnetic encoder data, other calibration methods may alternatively be possible and will not be limited herein.

In the above embodiment, with respect to determination of the focusing motor moving to reach the first end and the second end, a closest end of a focusing distance (i.e., focal length) may be determined as the first end, and a farthest end of the focusing distance may be determined as the second end.

In some embodiments, after achieving focusing at the closest end of the focusing distance, magnetic encoder data at the closest end may be read and used as the magnetic encoder data for the first end in the above embodiment. Similarly, after achieving focusing at the farthest end of the focusing distance, magnetic encoder data at the farthest end may be read and used as the magnetic encoder data for the second end in the above embodiment. It should be noted that, the closest end of the focusing distance may alternatively be used as the second end, and the farthest end may be used as the first end, which will not be limited herein.

In addition, in order to solve issues, such as the step loss or uneven motor stepping which may cause a calibration point not to be a clearest point, resulting in focusing difficulties when the calibrated data is applied, the present disclosure provides a following technical solution in addition to the above embodiment. N focusing distances may be obtained between the closest end and the farthest end of the focusing distance. The N is greater than 1 and less than the total number of movement steps of the focusing motor between the closest end and the farthest end. At each of the N focusing distances, the projector is controlled to achieve a sharp focus, and the magnetic encoder data when the sharp focus is achieved is recorded. In this way, correlation between the focusing distance and the magnetic encoder data may be achieved.

In another embodiment, according to the lens principle 1/u + 1/v = 1/f, u = (f*v)/(v-f) may be obtained.

The v represents an image distance, which is a distance from the optical engine lens to a wall.

The u represents an object distance, which is a distance from the lens of the optical engine to the DMD. The motor may drive the lens for focusing.

The f represents the focal length, which is the focal length of the lens.

The h represents a change in the focal length per motor movement step.

Within a focusing range [c, d], a focusing distance v0 may be selected where the optical engine achieves sharp focusing. When the sharp focusing is achieved, the object distance may be recorded as uᵥ₀ = (f*v0)/(v0-f). A distance to the focusing distance c is vo - c. A corresponding object distance to the point c is uᵥₒ - u_{c} = (f * vo) / (vo - f) - (f * c) / (c - f). In this way, the position of the focusing distance c may be obtained. The corresponding motor step count is Ic = uᵥ₀ - uc / h = ((f * v0) / (v0 - f) - (f * c) / (c - f)) / h. The focusing motor may be controlled to move Ic steps in a first direction toward the first end, and the magnetic encoder data Z0 when reaching the first end may be obtained.

Similarly, in order to obtain the position d of the focusing distance, the corresponding motor step count is Id = (uᵥ₀ - ud)/h = ((f*v0)/(v0 - f) - (f*d)/(d - f))/h. The focusing motor may be controlled to move Ic + Id steps in a direction opposite to the first direction, reaching the second end, and the magnetic encoder data Zn when reaching the second end is obtained.

It should be noted that, after the projector is fixed, the mapping relationship between the position of the focusing motor and the magnetic encoder data is generally established. However, as the projector is being used, the mapping relationship may be shifted. Therefore, the mapping relationship between the position of the focusing motor and the magnetic encoder data may be recalibrated subsequently, so as to provide better user experience.

In the present process, a current projection distance of the projector may first be obtained. For example, a time of flight (ToF) sensor may be used to measure the current projection distance. For the ToF sensor, the time of flight is a technique for measuring a distance by calculating time taken for light or other signals to travel from an emitter to a receiver. To be noted that, in addition to the above method for obtaining the current projection distance, other methods may alternatively be performed, which will not be limited herein.

After obtaining the current projection distance, the position of the focusing motor at which the projected image can be adjusted to be in focus to meet specifications may be obtained based on the lens principles. For an equation of the lens principles, a relationship among the object distance (u), the image distance (v), and the focal length (f) may be expressed as 1/f = 1/v - 1/u. The current projection distance may be the image distance (v). The position of the focusing motor represents the object distance. The current projection distance may be used as a current image distance. The object distance corresponding to the current image distance may be obtained based on the lens principles and may be denoted as a target object distance. The position of the focusing motor corresponding to the target object distance may be recorded as a target position of the focusing motor. Subsequently, the magnetic encoder data corresponding to the target position of the focusing motor may be determined as the target magnetic encoder data.

That is, the target position is a position at which the projected image is adjusted to be in focus at the current projection distance. Subsequently, based on the mapping relationship between the position of the focusing motor and the magnetic encoder data, the corresponding magnetic encoder data may be obtained and may be denoted as target magnetic encoder data. The target magnetic encoder data may be the magnetic encoder data at which the projected image is adjusted to be in focus during the current focusing process.

It should be noted that, in addition to determining the target magnetic encoder data based on the above method, the target magnetic encoder data may alternatively be obtained through other methods, which will not be limited herein.

In the block S130, after obtaining the current magnetic encoder data, the target magnetic encoder data, and the first focusing motor movement direction, the projector may be controlled for focusing based on the above information.

Specifically, the movement direction of the focusing motor during the current focusing process may first be determined based on the current magnetic encoder data and the target magnetic encoder data. The movement direction of the focusing motor during the current focusing process may be denoted as a second focusing motor movement direction.

In some embodiments, a difference between the current magnetic encoder data and the target magnetic encoder data may be calculated, and the second focusing motor movement direction may be determined based on the difference. In the present embodiment, when the difference is a positive value, the second focusing motor movement direction may be determined as a forward direction. When the difference is a negative value, the second focusing motor movement direction may be determined as a reverse direction.

After determining the second focusing motor movement direction, a target focusing strategy for the current focusing process may be determined based on the first focusing motor movement direction and the second focusing motor movement direction. When the first focusing motor movement direction is the same as the second focusing motor movement direction, a first focusing strategy may be determined as the target focusing strategy. When the first focusing motor movement direction is different from the second focusing motor movement direction, a second focusing strategy may be determined as the target focusing strategy.

In the first focusing strategy, the focusing motor can be directly controlled to move to a position corresponding to the target magnetic encoder data. In the second focusing strategy, the focusing motor backlash may first be eliminated, and subsequently, the focusing motor may be controlled to move to the position corresponding to the target magnetic encoder data. That is, the second focusing strategy includes performing backlash elimination, followed by performing the first focusing strategy.

When the target focusing strategy is the first focusing strategy, a magnetic encoder error of the focusing motor may be obtained. It should be noted that the magnetic encoder data may usually have certain fluctuations. In order to eliminate an impact caused by the fluctuations on a focusing result, a change in the magnetic encoder data, corresponding to the focusing motor moving by less than half of a depth of focus, may be recorded as the magnetic encoder error.

After obtaining the magnetic encoder error, the focusing motor of the projection may be controlled to move step by step, and at each movement step, it may be determined whether a difference between real-time magnetic encoder data and the target magnetic encoder data falls within the magnetic encoder error. That is, after each movement, the real-time magnetic encoder data may be obtained, and it may be determined whether the difference between the real-time magnetic encoder data and the target magnetic encoder data is less than the magnetic encoder error. When the difference is less than the magnetic encoder error, the different may be determined as the magnetic encoder error. It may be indicated that the focusing motor has moved to the position at which the projected image is in focus, and it may be determined that the projector has completed the current focusing process. In the present embodiment, completion of the focusing process may be determined by comparing the magnetic encoder data. In this way, focusing issues caused by step loss may be avoided, focusing quality may be better ensured, and the user experience may be improved.

It should be noted that, generally, the focusing motor may need to move for a relatively large number of steps to enable the image to be in focus. In order to avoid frequently determining whether the difference between the real-time magnetic encoder data and the target magnetic encoder data meets the magnetic encoder error, in the present embodiment, before controlling the focusing motor to move step by step and determining whether the difference between the real-time magnetic encoder data and the target magnetic encoder data meets the magnetic encoder error after each movement step, first magnetic encoder data may be firstly determined based on the current magnetic encoder data, the target magnetic encoder data, and the magnetic encoder error. Subsequently, the focusing motor of the projector may be controlled to move until the corresponding real-time magnetic encoder data reaches the first magnetic encoder data. It should be noted that the first magnetic encoder data is greater than the magnetic encoder error and less than the difference between the target magnetic encoder data and the current magnetic encoder data. However, a specific value of the first magnetic encoder data is not limited herein. For example, the first magnetic encoder data may be calculated as the target magnetic encoder data minus the current magnetic encoder data and further minus a magnetic encoder data corresponding to twice of the depth of focus.

In some embodiments, the target magnetic encoder data may be denoted as B, the current magnetic encoder data may be denoted as A, the magnetic encoder data corresponding to twice of the depth of focus may be denoted as S, and the first magnetic encoder data may be denoted as C. Therefore, C = B - A - S. In the present embodiment, the number of motor movement steps that the focusing motor needs to move to reach the position corresponding to the first magnetic encoder data may be determined first. After the focusing motor is controlled to move for the above-calculated number of motor movement steps, it may be determined whether the corresponding real-time magnetic encoder data reaches the first magnetic encoder data C. When the corresponding real-time magnetic encoder data does not reach the first magnetic encoder data C, it may be indicated that the focusing motor has not moved to reach the position corresponding to the first magnetic encoder data C, indicating that the focusing motor may have step loss. In this case, the focusing motor may be controlled to move step by step until the focusing motor reaches the position corresponding to the first magnetic encoder data C.

It should be clarified that "reaching the position corresponding to the first magnetic encoder data C" refers to the focusing motor just reaching the position corresponding to the first magnetic encoder data C, or the focusing motor moving just past the position corresponding to the first magnetic encoder data C (and in the latter case, the focusing motor does not reach the position corresponding to the first magnetic encoder data C at a previous step).

After determining that the focusing motor reaches the position corresponding to the first magnetic encoder data C, the focusing motor may be controlled to move step by step. After each movement, the real-time magnetic encoder data of each movement may be obtained, and it may be determined whether the difference between the real-time magnetic encoder data and the target magnetic encoder data is less than the magnetic encoder error. When the difference is less than the magnetic encoder error, the different may be determined as the magnetic encoder error, and that is, the focusing motor has moved to reach the position at which the projected image is in focus, and the current focusing process is completed. That is, when the difference between the real-time magnetic encoder data and the target magnetic encoder data is less than the magnetic encoder error, it may be determined that the current focusing process of the focus-to-be-adjusted device is completed.

When the target focusing strategy is the second focusing strategy, the projector may first be controlled to perform a backlash elimination processing. After the backlash elimination processing of the projector is completed, the first focusing strategy may then be performed to control the projector for focusing, and that is, the projector is controlled to perform focusing based on the current magnetic encoder data, the target magnetic encoder data, and the first focusing strategy.

When controlling the projector to perform the backlash elimination processing, the focusing motor of the projector may be controlled to move by increments of a set value, until the real-time magnetic encoder data after movement differs from the current magnetic encoder data, and it may be determined that the backlash elimination processing of the projector is completed. The set value may be less than or equal to half of the depth of focus.

In some embodiments, during the backlash elimination processing, the focusing motor may be controlled to move by less than or equal to half of the depth of focus each time, and real-time magnetic encoder data may be read for each movement. Furthermore, it may be determined whether the real-time magnetic encoder data is changed with respect to the current magnetic encoder data. It should be noted that magnetic encoder data does not change during the backlash. Therefore, when the magnetic encoder data changes, it may be indicated that the backlash occurs. When the magnetic encoder data remains unchanged, the focusing motor may be controlled to further move by less than or equal to half of the depth of focus, the real-time magnetic encoder data may be read again, and determination of any change in the real-time magnetic encoder data with respect to the current magnetic encoder data may be made again. The movement and the reading may be stopped when a change in the real-time magnetic encoder data with respect to the current magnetic encoder data is detected.

It should be noted that, in addition to the above method for eliminating the backlash, other methods may also be performed to eliminate the backlash, which will not be limited herein.

In addition, when the first focusing motor movement direction differs from the second focusing motor movement direction, the current focusing process may be directly controlled using the first focusing strategy. It should be noted that, in this case, only after determining that the difference between the real-time magnetic encoder data and the target magnetic encoder data meets the magnetic encoder error, it may be determined that the current focusing process of the projector is completed. Therefore, even without the backlash elimination processing, a focusing effect may still be guaranteed.

In the present embodiment, when the current focusing process for the focus-to-be-adjusted device is triggered, the current magnetic encoder data and the movement direction of the focusing motor during the previous focusing process (referred to as the first focusing motor movement direction) may be obtained. The magnetic encoder data (referred to as the target magnetic encoder data) when the projected image meets specifications (the projected image is in focus) during the current focusing process may be determined. Subsequently, the focus-to-be-adjusted device may be controlled to be in focus based on the above-mentioned magnetic encoder data and the focusing motor movement direction. Since the magnetic encoder is mounted on the lens barrel of the optical engine, when the focusing motor drives the lens barrel of the optical engine to move forward and backward, the magnetic encoder may read changes in the data, and that is, the magnetic encoder data may accurately reflect the position of the lens barrel. In this way, the focusing does not rely on an optical coupler of the focusing motor, and influences caused by focusing motor backlash may be eliminated. Furthermore, influences caused by step loss of the focusing motor may be eliminated. Hassle-free autofocusing may be achieved, rapid and precise focusing may be achieved, and the user experience may be improved.

In an embodiment, a focusing control apparatus is provided and is configured in a device that has a focus to be adjusted (i.e., the focus-to-be-adjusted device), such as the projection device. The focus-to-be-adjusted device includes the magnetic encoder, the optical barrel, and the focusing motor. The focusing motor drives the lens barrel to move, and movement of the lens barrel moves the lens arranged therein to move. The magnetic encoder is mounted on the lens barrel, and the magnetic encoder data represents the movement distance of the lens barrel. The apparatus is configured to perform the above focusing control method. Exemplarily, as shown in FIG. 2, the apparatus may include following components.

An obtaining module 10 may be configured to obtain the current magnetic encoder data of the focus-to-be-adjusted device and the first focusing motor movement direction during the previous focusing process.

A determination module 20 may be configured to determine the target magnetic encoder data corresponding to the current focusing process. The target magnetic encoder data is the magnetic encoder data at which the projected image is adjusted to be in focus during the current focusing process.

A focusing module 30 may be configured to control the focus-to-be-adjusted device to perform focusing based on the current magnetic encoder data, the target magnetic encoder data, and the first focusing motor movement direction.

In an embodiment, the focusing control apparatus is provided and configured in the focus-to-be-adjusted device, such as the projection device.

As shown in FIG. 2, in the focusing control apparatus, the focusing module 30 may be configured to: determine the second focusing motor movement direction in the current focusing process based on the current magnetic encoder data and the target magnetic encoder data; determine the target focusing strategy for the current focusing process based on the first focusing motor movement direction and the second focusing motor movement direction; and control the focus-to-be-adjusted device to perform focusing based on the current magnetic encoder data, the target magnetic encoder data, and the target focusing strategy.

In an embodiment, the focusing control apparatus is provided and configured in the focus-to-be-adjusted device, such as the projection device.

As shown in FIG. 2, in the focusing control apparatus, the determination module 20 may be configured to: determine the first focusing strategy to be used as the target focusing strategy when the first focusing motor movement direction is the same as the second focusing motor movement direction.

When the target focusing strategy is the first focusing strategy, the focusing module 30 may be configured to: obtain the magnetic encoder error of the focus-to-be-adjusted device; control the focusing motor of the focus-to-be-adjusted device to move step by step; after each movement step, determine whether the difference between the corresponding real-time magnetic encoder data and the target magnetic encoder data is less than the magnetic encoder error; and determine that the current focusing process of the focus-to-be-adjusted device is completed when the difference between the real-time magnetic encoder data and the target magnetic encoder data is less than the magnetic encoder error.

In an embodiment, the focusing control apparatus is provided and configured in the focus-to-be-adjusted device, such as the projection device.

As shown in FIG. 2, in the focusing control apparatus, the focusing module 30 may be configured to: before controlling the focusing motor of the focus-to-be-adjusted device to move step by step, determine the first magnetic encoder data based on the current magnetic encoder data, the target magnetic encoder data, and the magnetic encoder error, where the first magnetic encoder data is greater than the magnetic encoder error and less than the difference between the target magnetic encoder data and the current magnetic encoder data; and control the focusing motor of the focus-to-be-adjusted device to move until the corresponding real-time magnetic encoder data reaches the first magnetic encoder data.

In an embodiment, the focusing control apparatus is provided and configured in the focus-to-be-adjusted device, such as the projection device.

As shown in FIG. 2, in the focusing control apparatus, the determination module 20 may be configured to: determine the second focusing strategy to be used as the target focusing strategy when the first focusing motor movement direction is different from the second focusing motor movement direction.

When the target focusing strategy is the second focusing strategy, the focusing module 30 may be configured to: control the focus-to-be-adjusted device to perform backlash elimination processing; and after the backlash elimination processing being completed, control the focus-to-be-adjusted device to perform focusing based on the current magnetic encoder data, the target magnetic encoder data, and the first focusing strategy.

In an embodiment, the focusing control apparatus is provided and configured in the focus-to-be-adjusted device, such as the projection device.

As shown in FIG. 2, in the focusing control apparatus, the focusing module 30 may be configured to: control the focusing motor of the focus-to-be-adjusted device to move by increments of a set value until the real-time magnetic encoder data after movement differs from the current magnetic encoder data; and determine that the backlash elimination processing of the focus-to-be-adjusted device is completed when the real-time magnetic encoder data after movement differs from the current magnetic encoder data. The set value is less than or equal to half of the depth of focus.

In an embodiment, the focusing control apparatus is provided and configured in the focus-to-be-adjusted device, such as the projection device.

As shown in FIG. 2, in the focusing control apparatus, the determination module 20 may be configured to: obtain the current projection distance of the focus-to-be-adjusted device; take the current projection distance as the current image distance, obtain the object distance corresponding to the current image distance based on lens principles; and determine the target magnetic encoder data based on the target motor position corresponding to the object distance.

In an embodiment, a projection device is provided. The projection device refers to a device having projection capabilities, such as a projector, which will not be limited herein.

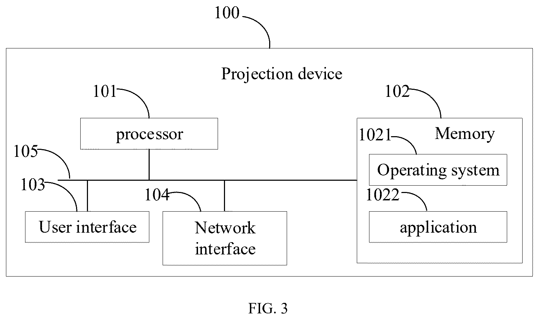

As shown in FIG. 3, the projector 100 may include: at least one processor 101, a memory 102, at least one network interface 104, and other user interfaces 103. Various components of the projector 100 may be coupled to each other via a bus system 105. It is understood that the bus system 105 may be configured to enable communication between the above components. In addition to a data bus, the bus system 105 may further include a power bus, a control bus, and a status signal bus. However, for clarity, all buses are collectively labeled as the bus system 105.

The user interface 103 may include a display, a keyboard, or a pointing projection device (such as a mouse, a trackball, a touchpad, or a touchscreen).

It is understood that the memory 102 in the embodiments of the present disclosure may be a volatile memory or a non-volatile memory, or may include both volatile and non-volatile memories. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), which serves as an external cache. In an example but not limitation, numerous forms of RAM are available, such as a static RAM (SRAM), a dynamic RAM (DRAM), a synchronous DRAM (SDRAM), a double data rate SDRAM (DDRSDRAM), an enhanced synchronous DRAM (ESDRAM), a synch link DRAM (SLDRAM), and a direct rambus RAM (DRRAM).

The memory 102 described herein may include, but not limited to, the above memories and any other suitable types of memories.

In some embodiments, the memory 102 may store an operating system 1021 and an application 1022, executable units, or data structures, or a subset thereof, or an extended set thereof.

The operating system 1021 may include various system programs, such as a framework layer, a core library layer, a driver layer, and so on, to implement various fundamental operations and to process hardware-based tasks. The application 1022 may include a plurality of applications, such as a media player, a browser, and so on, to implement various application operations. Programs implementing the method of the present disclosure may be included in the application 1022.

In the embodiments of the present disclosure, the processor 101 may execute the method provided in the embodiments by invoking programs or instructions stored in the memory 102, specifically the programs or instructions stored in the application 1022.

The method in the present disclosure may be applied in or performed by the processor 101. The processor 101 may be an integrated circuit chip having signal possessing capabilities. During implementation, blocks of the method in the above may be performed by integrated logic circuits within the processor 101 or via software instructions. The processor 101 may be a general-purpose processor, a digital signal processor (DSP), an application-specific integrated circuit (ASIC), a field-programmable gate array (FPGA), or other programmable logic devices, a discrete gate or transistor logic devices, or discrete hardware components. The processor may implement or execute the methods, the blocks, and the logic flow chart disclosed in the embodiments of the present disclosure. The general-purpose processor may be a microprocessor or any conventional processor. The blocks of the method disclosed in the embodiments herein may be executed by a hardware decoding processor, or executed by combination of hardware and software units within the decoding processor. The software unit may reside in any storage medium in the art, such as the random access memory (RAM), the flash memory, the read-only memory (ROM), the programmable read-only memory (PROM), the electrically erasable programmable read-only memory (EEPROM), or registers. The storage medium may be located in the memory 102. The processor 101 may read information from the memory 102 and work cooperatively with hardware to complete the above method.

It is understood that the embodiments described herein may be implemented based on hardware, software, firmware, middleware, microcode, or a combination thereof. For hardware implementation, a processing unit may be implemented in one or more Application Specific Integrated Circuits (ASICs), Digital Signal Processors (DSPs), a digital signal processing device (DSPD), a programmable logic device (PLD), a field-programmable gate array (FPGA), a general-purpose processor, a controller, a microcontroller, a microprocessor, other electronic units for performing the functions described herein, or a combination thereof.

For software implementation, technologies described herein may be implemented by units executing the functions described herein. Software codes may be stored in the memory and executed by the processor. The memory may be implemented within the processor or may be configured externally to the processor.

The present disclosure further provides a storage medium (computer-readable storage medium). The storage medium stores one or more programs. The storage medium may include a volatile memory, such as the random access memory (RAM). The storage medium may further include a non-volatile memory, such as the read-only memory (ROM), the flash memory, hard disk drives (HDDs), or solid-state drives (SSDs). The storage medium may further include combination of the above memories.

One or more programs stored in the storage medium are executable by one or more processors. When the storage medium is applied to the projector, the method as described in the above may be performed performed in the projector. The processor may be configured to execute a control program for the projector stored in the memory to implement the method executed in the projector as described in the above.

Any ordinary skilled person in the art shall further appreciate that units and algorithmic steps described in the embodiments disclosed herein may be implemented using electronic hardware, computer software, or a combination thereof. In order to clearly illustrate interchangeability between hardware and software, composition and steps of each embodiment have been described generally by function in the above. Implementing these functions in hardware or software may be determined based on the specific application and design constraints of the technical solution. Any ordinary skilled person in the art may perform different methods to achieve the described functions for each particular application, but such implementation shall not be considered outside the scope of the present disclosure.

It should be noted that terms, such as "an embodiment," "an implementation," "an exemplary embodiment," or "some embodiments", used in the specification indicate that the described embodiment may include a particular feature, structure, or characteristic, but not necessarily every embodiment includes the particular feature, structure, or characteristic. Furthermore, the term does not necessarily refer to a same embodiment. Moreover, when describing specific features, structures, or characteristics by referring to an embodiment, any ordinary skilled person in the art shall understand that the specific features, structures, or characteristics may be implemented in other embodiments explicitly or implicitly.

It should be noted that terms such as "first" and "second" are used herein merely to distinguish one entity or operation from another, without necessarily requiring or implying any such actual relationship or sequence therebetween. Moreover, the terms "include," "comprise," or any other variant thereof are intended to encompass non-exclusive inclusion. Therefore, a process, a method, an article, or a projector including a series of elements not only includes the listed elements but also includes other elements that are not explicitly listed, or include elements that are inherently included in the process, the method, the article, or the projector. Without further limitation, an element defined by the phrase "including a..." does not preclude presence of additional identical elements in the process, the method, the article, or the apparatus that includes the element.

The above embodiments show merely preferred examples provided for the purpose of fully illustrating the present disclosure, and the scope of the present disclosure is not limited thereto. Equivalent substitutions or variations made by any ordinary skilled in the art based on the present disclosure shall all be within the scope of the present disclosure.

## Claims

1. A focusing control method, performed by a focus-to-be-adjusted device, wherein, the focus-to-be-adjusted device comprises a magnetic encoder, a lens barrel, and a focusing motor; the focusing motor is configured to drive the lens barrel to move, and the magnetic encoder is mounted on the lens barrel; magnetic encoder data of the magnetic encoder is configured to represent a movement distance of the lens barrel; the focusing control method comprises:
during a current focusing process of the focus-to-be-adjusted device, obtaining (S110) current magnetic encoder data of the focus-to-be-adjusted device and a first focusing motor movement direction during a previous focusing process;
determining (S120) target magnetic encoder data corresponding to the current focusing process; wherein the target magnetic encoder data represents magnetic encoder data, during the current focusing process, at which a projected image is in focus;
controlling (S130) the focus-to-be-adjusted device to perform focusing based on the current magnetic encoder data, the target magnetic encoder data, and the first focusing motor movement direction.

2. The focusing control method according to claim 1, wherein, the controlling (S130) the focus-to-be-adjusted device to perform focusing based on the current magnetic encoder data, the target magnetic encoder data, and the first focusing motor movement direction, comprises:
determining, based on the current magnetic encoder data and the target magnetic encoder data, a second focusing motor movement direction during the current focusing process;
determining a target focusing strategy for the current focusing process based on the first focusing motor movement direction and the second focusing motor movement direction; and
controlling the focus-to-be-adjusted device to perform focusing based on the current magnetic encoder data, the target magnetic encoder data, and the target focusing strategy.

3. The focusing control method according to claim 2, wherein,
the determining a target focusing strategy for the current focusing process based on the first focusing motor movement direction and the second focusing motor movement direction, comprises:
determining a first focusing strategy to be used as the target focusing strategy, in response to the first focusing motor movement direction being the same as the second focusing motor movement direction;
when the target focusing strategy is the first focusing strategy, the controlling the focus-to-be-adjusted device to perform focusing based on the current magnetic encoder data, the target magnetic encoder data, and the target focusing strategy, comprises:
obtaining a magnetic encoder error of the focus-to-be-adjusted device;
controlling the focusing motor of the focus-to-be-adjusted device to move step by step, and after each movement step, determining whether a difference between real-time magnetic encoder data corresponding to each movement step and the target magnetic encoder data is less than the magnetic encoder error;
in response to the difference between the real-time magnetic encoder data and the target magnetic encoder data being less than the magnetic encoder error, determining that the current focusing process of the focus-to-be-adjusted device is completed.

4. The focusing control method according to claim 3, wherein, before the controlling the focusing motor of the focus-to-be-adjusted device to move step by step, the method further comprises:
determining first magnetic encoder data based on the current magnetic encoder data, the target magnetic encoder data, and the magnetic encoder error; wherein the first magnetic encoder data is greater than the magnetic encoder error and less than the difference between the target magnetic encoder data and the current magnetic encoder data; and
controlling the focusing motor of the focus-to-be-adjusted device to move until the corresponding real-time magnetic encoder data reaches the first magnetic encoder data.

5. The focusing control method according to claim 3, wherein,
the determining a target focusing strategy for the current focusing process based on the first focusing motor movement direction and the second focusing motor movement direction, comprises:
determining a second focusing strategy to be used as the target focusing strategy in response to the first focusing motor movement direction being different from the second focusing motor movement direction;
when the target focusing strategy is the second focusing strategy, the controlling the focus-to-be-adjusted device to perform focusing based on the current magnetic encoder data, the target magnetic encoder data, and the target focusing strategy, comprises:
controlling the focus-to-be-adjusted device to perform backlash elimination processing;
after the backlash elimination processing of the focus-to-be-adjusted device is completed, controlling the focus-to-be-adjusted device to perform focusing based on the current magnetic encoder data, the target magnetic encoder data, and the first focusing strategy.

6. The focusing control method according to claim 5, wherein, the controlling the focus-to-be-adjusted device to perform backlash elimination processing, comprises:
controlling the focusing motor of the focus-to-be-adjusted device to move by increments of a set value until the real-time magnetic encoder data after movement being different from the current magnetic encoder data; and determining that the backlash elimination processing is completed, wherein the set value is less than or equal to half of a depth of focus.

7. The focusing control method according to any one of claims 1 to 6, wherein, the determining (S120) target magnetic encoder data corresponding to the current focusing process, comprises:
obtaining a current projection distance of the focus-to-be-adjusted device;
taking the current projection distance as a current image distance, obtaining an object distance corresponding to the current image distance based on lens principles; and
determining the target magnetic encoder data based on a target motor position corresponding to the object distance.

8. A focusing control apparatus, configured in a focus-to-be-adjusted device, wherein, the focus-to-be-adjusted device comprises a magnetic encoder, a lens barrel, and a focusing motor; the focusing motor is configured to drive the lens barrel to move, and the magnetic encoder is mounted on the lens barrel; magnetic encoder data of the magnetic encoder is configured to represent a movement distance of the lens barrel; the focusing control apparatus comprises:
an obtaining module (10), configured to obtain, during a current focusing process of the focus-to-be-adjusted device, current magnetic encoder data of the focus-to-be-adjusted device and a first focusing motor movement direction during a previous focusing process;
a determination module (20), configured to determine target magnetic encoder data corresponding to the current focusing process; wherein the target magnetic encoder data represents magnetic encoder data, during the current focusing process, at which a projected image is in focus;
a focusing module (30), configured to control ling the focus-to-be-adjusted device to perform focusing based on the current magnetic encoder data, the target magnetic encoder data, and the first focusing motor movement direction.

9. The focusing control apparatus according to claim 8, wherein, the focusing module (30) is further configured to:
determine a second focusing motor movement direction in the current focusing process based on the current magnetic encoder data and the target magnetic encoder data;
determine a target focusing strategy for the current focusing process based on the first focusing motor movement direction and the second focusing motor movement direction; and control the focus-to-be-adjusted device to perform focusing based on the current magnetic encoder data, the target magnetic encoder data, and the target focusing strategy.

10. The focusing control apparatus according to claim 9, wherein, the determination module (20) is further configured to:
determine a first focusing strategy to be used as the target focusing strategy when the first focusing motor movement direction is the same as the second focusing motor movement direction; and
determine a second focusing strategy to be used as the target focusing strategy when the first focusing motor movement direction is different from the second focusing motor movement direction.

11. The focusing control apparatus according to claim 10, wherein, when the target focusing strategy is the first focusing strategy, the focusing module (30) is further configured to:
obtain a magnetic encoder error of the focus-to-be-adjusted device;
control the focusing motor of the focus-to-be-adjusted device to move step by step;
after each movement step, determine whether a difference between a real-time magnetic encoder data corresponding to each movement step and the target magnetic encoder data is less than the magnetic encoder error; and
determine that the current focusing process of the focus-to-be-adjusted device is completed when the difference between the real-time magnetic encoder data and the target magnetic encoder data is less than the magnetic encoder error.

12. The focusing control apparatus according to claim 10, wherein, when the target focusing strategy is the second focusing strategy, the focusing module (30) is further configured to:
control the focus-to-be-adjusted device to perform backlash elimination processing; and
after the backlash elimination processing being completed, control the focus-to-be-adjusted device to perform focusing based on the current magnetic encoder data, the target magnetic encoder data, and the first focusing strategy.

13. The focusing control apparatus according to claim 11 or 12, wherein, a change in the magnetic encoder data, corresponding to the focusing motor moving by less than half of a depth of focus, is the magnetic encoder error.

14. A projection device, comprising:
a processor (101);
a memory (102), configured to storing instructions executable by the processor (101);
wherein the processor (101) is configured to execute the focusing control method according to any one of claims 1-7.

15. A storage medium, storing one or more programs, wherein the one or more programs are executable by one or more processors to implement the focusing control method according to any one of claims 1-7.
